# EUROPÄISCHE PATENTANMELDUNG

(11) **EP 1 065 422 A1**
(43) Veröffentlichungstag der Anmeldung: **03.01.2001**
(21) Anmeldenummer: 99890210.0
(22) Anmeldetag: 28.06.1999
(51) Int. Cl.: F16L 13/10

(54) **Verbindung von Teilen aus Verbundwerkstoff**

(71) Anmelder: Pankl R&D GmbH, 8600 Bruck an der Mur (AT)
(72) Erfinder: Pankl, Gerold, 8600 Bruck an der Mur (AT)
(74) Vertreter: Patentanwälte BARGER, PISO & PARTNER

(57) **Zusammenfassung**

Die Erfindung betrifft die Verbindung von Teilen (1,7), wobei zumindest einer der Teile (7) aus Verbundwerkstoff, beispielsweise aus faserverstärktem Werkstoff, MMC-Material oder dergleichen, besteht mit zumindest in wesentlichen zylindrischen oder konischen Klebeflächen (5',6').

Die Erfindung ist dadurch gekennzeichnet, daß im Bereich der Verbindungsstelle der kürzere Bauteil (7) den längeren umfaßt (1).

Ausgestaltungen der Erfindung betreffen die Montage von Flanschen und anderen Anschlußteilen.

## Beschreibung

Die Erfindung betrifft die Verbindung von Teilen, wobei zumindest einer der Teile aus Verbundwerkstoff, beispielsweise aus faserverstärktem Werkstoff, MMC-Material oder dergleichen, besteht.

Diese Teile können beispielsweise eine Welle aus Verbundwerkstoff und ein Flansch oder ein Ansatzteil aus Metall oder ebenfalls aus Verbundwerkstoff sein. Selbverständlich können auch andere Bauteile, insbesondere drehsymmetrische, miteinander verbunden werden.

Im Stand der Technik wurde der Verbindung derartiger Teile nur insofern Aufmerksamkeit geschenkt, als die Verbindungsfläche unter Bedachtnahme auf die Sepzifikation des verwendeten Klebstoffes, der zu verbindenden Materialien und der zu erwartenden Belastung genügend groß ausgebildet wurde, um die Klebverbindung nicht zu überlasten.

Es gibt beispielsweise bei Hochleistungsfahrzeugen im Antriebsstrang Hohlwellen aus faserverstärktem Kunststoff, die mit Flanschen aus Titan verklebt werden. Dabei wird am Flansch ein Dorn passender Länge vorgesehen, der in die Hohlwelle gesteckt und mit der Innenmantelfläche verklebt wird. Dabei treten immer wieder Probleme auf, weil entweder zu geringe Klebstoffmengen verwendet werden, was die Klebverbindung unzuverläßig macht, oder weil zu große Mengen verwendet werden, die sich im unteren Bereich der Hohlwelle ansammeln und den fertigen Bauteil stark Unwuchtig machen, was besonders bei den ins Auge gefaßten Verwendungszwecken im Hochleistungsbereich zu großen Problemen führt.

Es ist Aufgabe der Erfindung, derartige Nachteile zu vermeiden und eine Verbindung anzugeben, die zuverläßig und höher belastbar als bisherige Verbindungen ist.

Erfindungsgemäß werden diese Ziele dadurch erreicht, daß bei derartigen Verbindungen im Bereich der Verbindungsstelle der kürzere Bauteil den längeren umfaßt.

Wenn, im Falle einer Welle aus Verbundmaterial mit Flanschen, der Flansch als getrennter Teil hergestellt wird und beispielsweise aus Metall oder auch aus Verbundwerkstoff besteht, wobei als Metall bevorzugt Stahl oder Titan verwendet wird, so wird erfindungsgemäß vorgesehen, daß der Flansch eine der Welle zugewandte Buchse aufweist, deren innere Mantelfläche mit der äußeren Mantelfläche der Welle verklebt wird.

Man erhält auf diese Weise einerseits eine etwas größere Klebefläche als bisher beim Einbringen der Buchse in das Innere der Welle zur Verfügung stand, legt die Klebefläche radial nach außen, wodurch ihre Momentenbelastung sinkt und hat darüber hinaus gute Kontrollmöglichkeiten für den Klebstoffauftrag und die Verteilung des Klebstoffes.

Es können dabei auch die büchsenartigen Fortsätze des einen Teiles (Flansches) und das Gegenstück (Wellenende) konisch ausgebildet sein, um zu sicher passenden Oberflächen zu kommen. Es muß dann unter Umständen für eine axiale Verstellbarkeit und Justierbarkeit der Bauteile gesorgt werden.

In einer Ausgestaltung der Erfindung und insbesondere, wenn beispielsweise eine Welle aus Verbundwerkstoff mit einem Ansatzteil, beispielsweise einem Vielzahnansatz od. ähnl. aus Verbundwerkstoff oder auch aus Metall versehen werden soll, ist die erfindungsgemäße Verbindung dadurch gekennzeichnet, daß die Mantelwandstärke der Welle zu ihrem Ende hin abnimmt, wobei die Außenfläche konisch ausgebildet ist und die Innenfläche konisch oder zylindrisch, und daß der Ansatzteil einen inneren und einen äußeren Kragen aufweist, die jeweils eine Ausbildung der Oberfläche haben, die der Oberfläche des Endteiles der Welle entspricht, mit dem sie in Berührung kommen. Dadurch wird die zur Verklebung der beiden Teile zur Verfügung stehende Oberfläche ohne Vergößerung der Außenabmessungen praktisch verdoppelt und so eine besonders sichere Verbindung geschaffen.

In einer besonders bevorzugten Ausgestaltung ist vorgesehen, daß die innere Oberfläche in einen von der Kreisform abweichenden, beispielsweise polygonalen, bevorzugt dreieckigen, Querschnitt übergeht, wobei die Polygonseiten gekrümmt verlaufen. Auf diese Weise wird durch den äußeren Kragen eine radial nach außen gerichtete Deformation des Mantels der Welle in ihrem Endbereich verhindert und durch die polygonale Ausbildung sowohl der inneren Oberfläche des Endteils der Welle als auch der äußeren Mantelfläche des inneren Kragens des Ansatzteiles wird formschlüssig zusätzlich zum Verkleben eine große Drehmomentübertragung gesichert.

Es ist selbverständlich die erfindungsgemäße Verbindung nicht auf die Verbindung von Wellen mit ihren Ansatzteilen und/oder Flanschen beschränkt sondern kann im gesamten Bereich der Verwendung von Teilen aus Verbundwerkstoffen eingesetzt werden. Da bei zumindest im wesentlichen rotationssymmetrischen Teilen die Anwendung besonders einfach ist, wird die Erfindung anhand derartiger Teile, nämlich Wellen, näher erläutert.

Zu den verwendbaren Werkstoffen ist auszuführen, daß es seit kurzer Zeit nicht nur glasfaser- bzw. kohlefaser- (oder anders geformte Verstärkungspartikel aufweisende) oder kevlarverstärkte Kunststoffe gibt, sondern eine Materialgruppe mit der Bezeichnung MMC, was für "metal matrix composite" steht. Dabei wird statt des Kunststoffes ein Metall als Matrixmaterial verwendet, insbesondere Titan, Aluminium oder Magnesium. Es werden in der Beschreibung und den Ansprüchen diese Werkstoffe auch als "Verbundwerkstoffe" bezeichnet.

Das Verstärkungsmaterial kann aus Partikeln unterschiedlicher Form bestehen, worunter auch Fasern fallen. Wenn Fasern verwendet werden, können sie aus den bekannten Fasermaterialien bestehen. Als Beispiele seien nur Boron oder Siliziumcarbid genannt. Die Faserlänge kann in weiten Grenzen variieren, auch sogenannte "whiskers" (Stapelfasern) können geordnet oder statistisch liegend, verwendet werden. All diese Faserarten und die anderen Verstärkungspartikeln werden in der vorliegenden Beschreibung und den Ansprüchen als "Partikel" oder "Verstärkungspartikel" bezeichnet.

Derartige Verbundwerkstoffe weisen Eigenschaften auf, die' sehr genau und in weiten Grenzen in mechanischer, thermischer und chemischer Hinsicht an die jeweiligen Erfordernisse angepaßt werden können.

Wenn Fasern als Verstärkungsmaterial verwendet werden, werden diese, wie bei der Verarbeitung von Fasern üblich, meist gleich zu mehreren zusammengefaßt, um entsprechende Kerne gewickelt und Schicht für Schicht mit dem passenden Werkstoff verklebt, gefolgt von einem Aushärten, meist bei erhöhter Temperatur, die heute bei hochwertigen Werkstoffen bis zu 250°C und darüber betragen kann.

Wie weiter oben bereits kurz erläutert, wird bei der Verbindung von beispielsweise Flanschen mit einer Welle, wobei zumindest einer der beiden Teile aus Verbundmaterial besteht, erfindungsgemäß vorgesehen, daß die Flansche zylindrische, büchsenartige Vorsprünge aufweisen, die das zylindrische Ende der Welle außen im wesentlichen spielfrei und flächig berührend umschließen. Diese einander entsprechenden Flächen werden miteinander verklebt. Dabei kann das Aufbringen des Klebstoffes auf der Innenseite der kurzen Buchsen bzw. der Außenseite der Wellenenden leichter kontrolliert und auf seine Ordnungsgemäßheit überwacht werden und es kann nach erfolgtem Ineinanderstecken während des Aushärtens der Austritt von überschüssigem Klebstoff am Ende der Buchse ebenfalls leicht und zuverlässig kontrolliert werden. Diese Kontrolle spielt nicht nur wegen der Zuverlässigkeit der Klebung eine wichtige Rolle, sondern auch wegen des exzentrischen Austretens des Klebstoffes, was bei einer hochdrehenden Welle, wenn diese beispielsweise im Antriebsstrang eines Hochleistungsfahrzeuges angeordnet ist, zu zusätzlichen Lagerbeanspruchungen und Unwuchtverhalten führen kann.

Die Erfindung ist in der Zeichnung an Hand von Ausführungsbeispielen näher erläutert. Dabei zeigt
die Fig. 1 eine erfindungsgemäße Welle in Seitenansicht,
die Fig. 2 eines der Enden der Welle der Fig. 1 in vergrößerter Darstellung im Schnitt,
die Fig. 3 eine Ansicht der Welle der Fig. 3 in Richtung des Pfeiles III der Fig. 1,
die Fig. 4 einen Vielzahnteil, der auf das Ende der Welle der Fig. 1 montierbar ist, in vergrößerter Ansicht im Schnitt,
die Fig. 5 eine Ansicht des Ansatzteiles der Fig. 4 in Richtung des Pfeiles V der Fig. 4 und
die Fig. 6 eine perspektivische Ansicht der Welle der Fig. 1, versehen mit zwei Ansatzteilen gemäß Fig. 4.

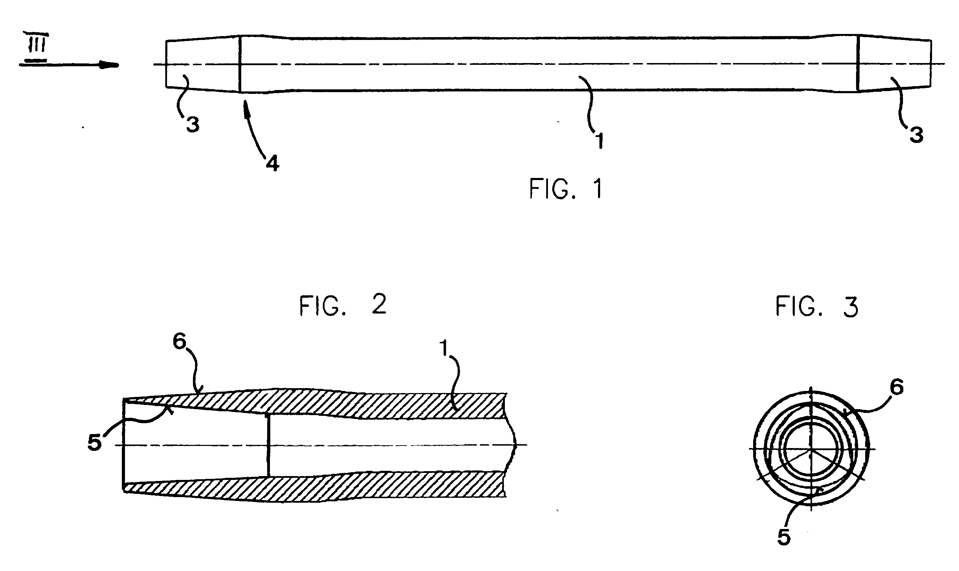

Eine besondere Ausgestaltung der erfindungsgemäßen Verbindung ist in der Zeichnung dargestellt. Dabei zeigt die Fig. 1 eine erfindungsgemäß verwendbare Welle in seitlicher Ansicht. Die Enden 3 der Welle 1 sind, von außen gesehen, konisch zulaufend ausgebildet, wobei im Nahebereich der Enden, beim Übergang von diesen Enden 3 zur eigentlichen Welle 1, ein Bereich 4 mit vergrößertem Durchmesser vorgesehen ist.

Aus Fig. 2 ist ersichtlich, daß der äußeren Konusform ein innerer Gegenkonus entspricht, so daß die Wandstärke der Welle 1 zu ihren Enden hin abnimmt.

Wie insbesondere aus Fig. 3, die eine axiale Anischt in Richtung des Pfeiles III der Fig. 1 darstellt, ersichtlich ist, verlaufen die innere Oberfläche 5 und die äußere Oberfläche 6 des Endbereiches 3 nicht konzentrisch zueinander. Die äußere Oberfläche 6 weist im wesentlichen Kreisquesrschnitt, somit Kreiskegelform auf, die innere Oberfläche 5 dagegen weist am Ende der Welle 1 einen von der Kreisform abweichenden Querschnitt auf.

Dieser hat beim dargestellten Ausführungsbeispiel etwa die Form eines Reuleaux-Dreieckes mit abgerundeten Ecken, sogenannte "K-Form", wobei diese Querschnittsform mit zunehmendem Abstand vom Ende des Rohres 1 in Kreisform übergeht.

Auch in Fig. 2 ist durch die unterschiedliche Wandstärke der oberen Schnittfläche zur unteren Schnittfläche diese Ausbildung ersichtlich.

Die Ursache für diese spezielle Ausbildung der Enden der erfindungsgemäßen Welle 1 liegt in der Wirksamkeit dieser Fläche, im Verein mit einer korrespondierenden Außenfläche 5' eines mit dem Wellenende 3 verklebten Ansatzteiles aus Verbundwerkstoff oder Metall, extrem hohe Drehmomente übertragen zu können.

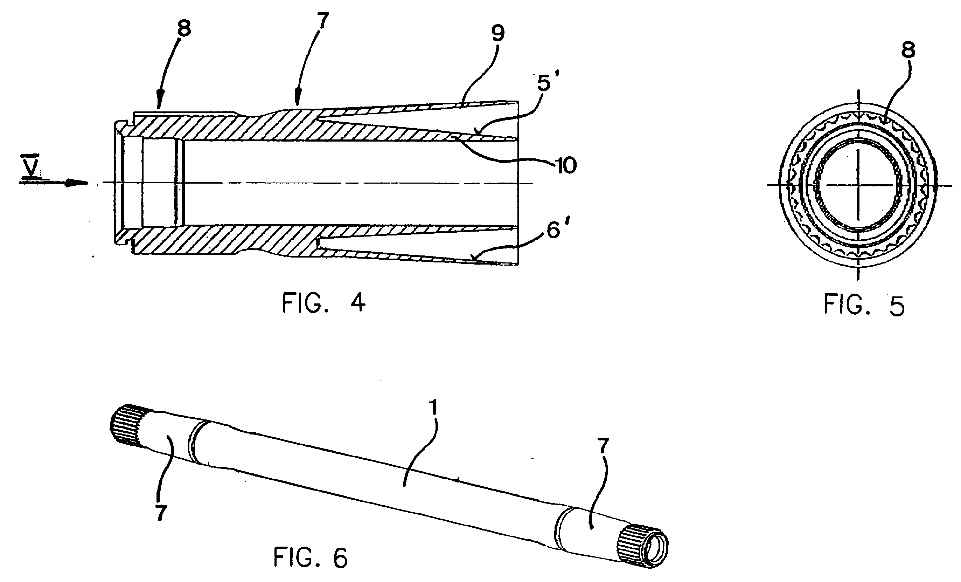

Dies wird aus einer Betrachtung der Fig. 2 und 4 deutlich. Die Fig. 4 und 5 stellen einen erfindungsgemäß adaptierten Anschlußteil 7 mit einem Vielzahnbereich 8 zur Übertragung des Drehmomentes dar. Dieser Anschlußteil 7 weist, der Welle 1 zugekehrt, einen äußeren, konischen Kragen 9 und einen inneren, nur im wesentlichen konischen Kragen 10 auf. Der äußere Kragen 9 weist eine innere Oberfläche 6' auf, die mit der äußeren Oberfläche 6 des Endes 3 der Welle 1 korrespondiert und der innere Kragen 10 weist eine äußere Oberfläche 5' auf, die mit der inneren Oberfläche 5 des Endes 3 der Welle 1 korrespondiert. Es kann diese Form bei metallischem Ansatzteil 7 mittels Funkenerosion mit den heutigen Bearbeitungsmaschinen problemlos hergestellt werden.

Es ist, mit anderen Worten, die Oberfläche 6' im wesentlichen kegelförmig, die Oberfläche 5' an ihrem freien Ende im wesentlichen kegelförmig, am Ende das dem Zahnbereich 8 zugekehrt ist, im wesentlichen mit dem Querschnitt eines Reuleaux-Dreieck mit abgerundeten Ecken versehen.

Die Wirkungsweise der Verbindung im aufgesteckten und verklebten Zustand ist folgende: Die äußere Schürze 9 wird bei Übertragung großen Drehmomentes von der Welle 1 zum Anschlußteil 7 auf Zug in Umfangsrichtung belastet, da der Endbereich 3 der Welle 1 dazu neigt, sich zwischen dem äußeren Kragen 9 und dem inneren Kragen 10 zu verdrehen und dabei die Wandstärkenänderungen ein Aufweiten des äußeren Kragens 9 notwendig macht, wenn eine solche Verdrehung stattfinden soll. Zufolge der großen Zugfestigkeit des Anschlußteiles 7, der bevorzugt aus hochfestem Stahl oder Titan oder hochfestem Verbundwerkstoff besteht, wird eine solche Dehnung oder Deformation des äußeren Kragens 9 verhindert und es wird so zusätzlich zu der durch den Kleber übertragenen Kraft noch der Deformationswiderstand zur Übertragung des Drehmomentes herangezogen.

Die Fig. 6 stellt eine perspektivische Ansicht einer entsprechend zusammengebauten und verklebten Welle 1 mit Anschlußteilen 7 dar.

Die Erfindung ist nicht auf das dargestellte Ausführungsbeispiel beschränkt, sondern kann verschiedentlich abgewandelt werden. So ist es selbstverständlich möglich, auch beim Aufbringen eines getrennten Flansches das bzw. die Enden der Welle so wie an Hand des Ansatzteiles 7 beschrieben, auszubilden, um die Drehmomentbelastbarkeit zu erhöhen. Es ist selbverständlich die beschriebene Verbindung nicht auf die Verbindung zwischen Wellen und Ansatzstücken bzw. Flanschen beschränkt, sondern kann insbesondere bei zumindest im wesentlichen rotationssymmetrischen Bauteilen im Maschinenbau vorteilhaft verwendet werden. Es kann die Erfindung auch durch das Nebeneinander-Vorsehen mehrerer der beschribenen Teile, nach Art der Vorsprünge eines Lego-Bausteines, bei großflächigen Verbindungen verwendet werden, wobei wegen des Wegfalles der Drehbelastung jede dieser Verbindugnen rotationssymmetrisch sein kann.

Es ist selbstverständlich auch nicht notwendig, daß die Ausbildung der Wellenenden in Form eines Reuleaux-Dreiecks erfolgt, es ist auch denkbar, linsenförmige oder polygonale Form mit vier oder mehr Kanten zu wählen, wobei nur auf entsprechende Ausrundungen und Übergänge zu achten ist, um Kerbrisse zuverlässig zu vermeiden. Dabei können aufgrund der Materialeigenschaften durchaus auch viele Kanten verwendet werden, beispielsweise in der Größenordnung von zwanzig oder mehr. Der Übergang zur Verwendung zweier kreisförmiger Querschnitte ist dabei in Abhängigkeit von den mechanischen Eigenschaften der verwendeten Werkstoffe feinstufig. Letztlich bleibt auch dann noch der Vorteil einer wesentlich vergrößerten Klebefläche erhalten, wenn auch mit immer geringer werdendem Einfluß der Formschlüssigkeit.

Die detaillierte Herstellung und Ausbildung der erfindungsgemäßen Verbindung ist für den Fachmann auf dem Gebiete der faserverstärkten Werkstoffes in Kenntnis der Erfindung leicht möglich, es müssen dabei nur die auf diesem Gebiete üblichen konstruktiven Maßnahmen beachtet werden.

Das gleiche gilt für die zur Verwendung kommenden Werkstoffe, auch diese sind dem Fachmann auf dem Gebiete der Verbndwerkstoffe geläufig und können unter Bedachtnahme auf die Beanspruchungen beim jeweiligen Einsatzgebiet aus einer Vielzahl industrieller erhältlicher Produkte gewählt werden.

## Patentansprüche

1. Verbindung von Teilen, wobei zumindest einer der Teile aus Verbundwerkstoff, beispielsweise aus faserverstärktem Werkstoff, oder MMC-Material besteht mit zumindest im wesentlichen zylindrischen oder konischen Klebeflächen, dadurch gekennzeichnet, daß im Bereich der Verbindungsstelle der kürzere Bauteil den längeren umfaßt.

2. Verbindung nach Anspruch 1, dadurch gekennzeichnet, daß einer der Teile (3) im Bereich der Verbindungsstelle mit einer sich zu ihrem Ende hin verjüngenden Wandstärke versehen ist, daß in diesem Endbereich (3) seine äußere Oberfläche (6) zumindest im wesentlichen kreiskegelförmige oder kreiszylinderförmige Form aufweist und daß der andere Teil (7) den Endbereich (3) an seiner äußeren und inneren Oberfläche mit einem äußeren Kragen (9) und einem inneren Kragen (10) kontaktiert.

3. Verbindung nach Anspruch 2, dadurch gekennzeichnet, daß im Endbereich (3) die innere Oberfläche (5) am freien Ende einen von der Kreisform abweichenden Querschnitt aufweist, der im Verlauf des Endabschnittes (3) in den Kreisquerschnitt übergeht.

4. Verbindung nach Anspruch 3, dadurch gekennzeichnet, daß der Querschnitt der inneren Oberfläche (5) am freien Ende im wesentlichen die Form eines Reuleaux-Dreieckes mit abgerundeten Ecken aufweist.

5. Verbindung nach Anspruch 3, dadurch gekennzeichnet, daß der Querschnitt der inneren Oberfläche (5) am freien Ende im wesentlichen die Form eines Polygons mit gebogenen Kanten und bevorzugt mit abgerundeten Ecken aufweist.

6. Verbindung nach einem der Ansprüche 1 bis 5, dadurch gekennzeichnet, daß der eine Teil eine Welle aus Verbundwerkstoff und der andere Teil ein Anschlußteil eines Flansches oder einer Vielzahnverbindung ist, wobei letzterer Teil zwei Krägen (9,10) aufweist, die einen ringförmigen Spalt definieren, dessen Oberflächen (5',6') den Oberflächen (5,6) in Form und Abmessungen entsprechen.
